# FASCICULE DE BREVET EUROPEEN

(11) **EP 3 161 309 B1**
(45) Date de publication et mention de la délivrance du brevet: **29.08.2018**
(21) Numéro de dépôt: 15732599.4
(22) Date de dépôt: 23.06.2015
(51) Int. Cl.: F03D 5/06, G01F 1/32, F03B 17/06

(54) **DISPOSITIF DE RECUPERATION D'ENERGIE A DRAPEAU**
ENERGIERÜCKGEWINNUNGSVORRICHTUNG MIT FLAGGE
ENERGY RECOVERY DEVICE WITH FLAG

(30) Priorité: 25.06.2014 FR 1455904
(43) Date de publication de la demande: 03.05.2017
(73) Titulaire: Ecole Polytechnique, 91128 Palaiseau Cedex (FR); Conservatoire National des Arts et Métiers, 75003 Paris (FR); CNRS Centre National de la Recherche Scientifique, 75794 Paris Cedex 16 (FR)
(72) Inventeur: HEMON, Pascal, F-94200 Ivry Sur Seine (FR); AMANDOLESE, Xavier, F-75011 Paris (FR); VIROT, Emmanuel, F-92340 Bourg La Reine (FR)
(74) Mandataire: Nony
(86) Numéro de dépôt international: PCT/EP2015/064121
(87) Numéro de publication internationale: WO 2015/197621

(56) Documents cités:
- WO-A2-2006/093790
- US-A- 4 476 397
- US-A- 4 486 145
- US-A- 5 223 763
- US-A1- 2006 064 972
- US-A1- 2009 121 489

## Description

L'invention concerne un dispositif de récupération d'énergie à drapeau, pour récupérer de l'énergie d'un écoulement d'un fluide, et des systèmes mettant en oeuvre un tel dispositif.

Dans le domaine des énergies renouvelables, de nombreux dispositifs ont été proposés pour récupérer de l'énergie d'un écoulement de fluide naturel. On peut ainsi mentionner les éoliennes pour récupérer de l'énergie du vent. Des dispositifs comme des turbines ou des hydroliennes permettent de récupérer de l'énergie d'un flux de liquide, comme un courant marin, par exemple.

Des dispositifs à drapeaux ont également été décrits, qui permettent de récupérer de l'énergie d'un écoulement de fluide (liquide ou gaz) le long du drapeau.

Un premier tel dispositif comprend un drapeau sous forme d'une membrane équipée de cellules piézo-électriques. Les cellules piézo-électriques génèrent ainsi un courant quand la membrane est déformée du fait de l'écoulement du fluide.

Un tel dispositif est cependant complexe et onéreux. En outre, son rendement est réduit.

Un autre exemple de dispositif de récupération d'énergie à drapeau est par exemple décrit dans la demande WO-A-2006/093790. Ce dispositif comprend un drapeau fixé à un mât. Le mât est associé à un générateur électrique via un dispositif d'entraînement permettant de transformer les rotations alternatives du mât dans un sens puis dans l'autre, en mouvement de rotation continue dans un sens unique. Dans ce dispositif, les mouvements du drapeau, provoqués par l'écoulement de fluide le long de ce dernier, mettent le mât en rotation alternativement dans un sens et dans l'autre.

Cependant, ce dispositif de récupération d'énergie à drapeau présente un rendement faible. Un autre exemple est décrit dans le document US 4486145 A.

L'invention a pour but de proposer un dispositif de récupération d'énergie à drapeau présentant un rendement amélioré et qui reste, malgré tout, de conception simple. L'invention a également pour but de proposer différents systèmes mettant en oeuvre un tel dispositif de récupération d'énergie à drapeau.

À cet effet, l'invention propose un dispositif de récupération d'énergie de l'écoulement d'un fluide selon la revendication 1.

Ainsi, le dispositif oscillateur permet d'augmenter l'amplitude des oscillations du mât oscillant sous l'effet de l'écoulement du fluide sur le drapeau. Cette augmentation de l'amplitude des oscillations du mât permet d'augmenter le rendement du dispositif récupérateur d'énergie à drapeau.

Selon des modes de réalisation préférés, le dispositif peut présenter une ou plusieurs des caractéristiques suivantes, prises seules ou en combinaison :
- le dispositif oscillateur comporte un bras d'inertie fixé au mât oscillant, le mât oscillant étant de préférence fixé sensiblement au milieu du bras d'inertie et/ou perpendiculairement au bras d'inertie, le bras d'inertie étant par ailleurs destiné à être relié au bâti, par les moyens de rappel ;
- les moyens de rappel comprennent deux ressorts linéaires, de préférence identiques, fixés chacun au voisinage d'une extrémité respective du bras d'inertie ;
- les moyens de rappel sont un ressort de torsion ;
- le drapeau est
   ∘ en tôle, notamment en tôle d'acier,
   ∘ en plastique, notamment en polytéréphtalate d'éthylène, plus particulièrement en Mylar®,
   ∘ en papier, ou
   ∘ en matériau textile.
- le drapeau comporte une pluralité de préférence d'au moins trois plaques articulées les unes par rapport aux autres ; et
- le dispositif comprend en outre un générateur électrique, par exemple une machine dynamoélectrique, relié au mât oscillant pour transformer l'énergie mécanique de la rotation du mât oscillant en énergie électrique.

Selon un autre aspect, l'invention se rapporte à un système de mesure d'une vitesse d'un écoulement de fluide comprenant un dispositif de récupération d'énergie de l'écoulement du fluide tel que décrit ci-avant dans toutes ses combinaisons, et des moyens pour fournir un signal de sortie fonction de l'amplitude des oscillations du mât oscillant.

L'invention se rapporte en outre à un système de mesure de débit d'un écoulement de fluide comprenant un dispositif de récupération d'énergie de l'écoulement du fluide tel que décrit ci-avant dans toutes ses combinaisons, un conduit de section connue dans lequel s'étend le drapeau, et des moyens pour fournir un signal de sortie fonction de l'amplitude des oscillations du mât oscillant et de la section dudit conduit.

L'invention se rapporte également à un système de régulation du débit et/ou de la vitesse d'un écoulement de fluide comprenant un dispositif de récupération d'énergie de l'écoulement du fluide tel que décrit ci-avant dans toutes ses combinaisons, une vanne adaptée à modifier le débit et/ou la vitesse de l'écoulement du fluide, et des moyens pour commander l'ouverture ou la fermeture de la vanne en fonction de l'amplitude des oscillations du mât oscillant.

L'invention sera mieux comprise à la lumière de la description qui va suivre, description faite en référence aux dessins annexés, parmi lesquels :
- la figure 1 représente en perspective un dispositif de récupération d'énergie à drapeau ; et
- la figure 2 représente une comparaison de l'évolution de l'amplitude des oscillations du mât du dispositif de la figure 1 et d'un dispositif analogue sans dispositif oscillateur, en fonction de la vitesse de l'écoulement de fluide le long du drapeau.

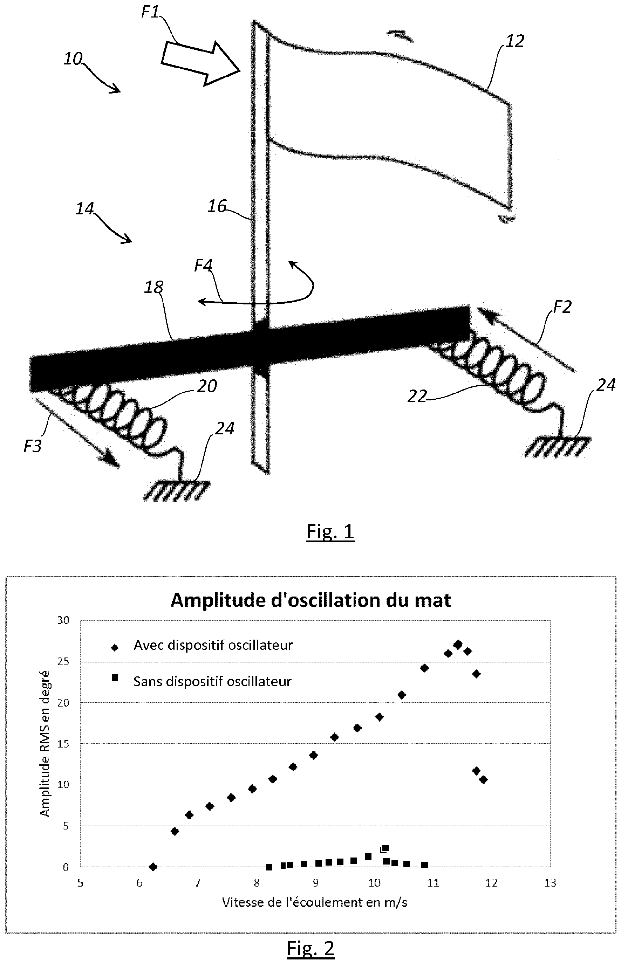

La figure 1 représente un exemple de dispositif 10 de récupération d'énergie d'un écoulement d'un fluide.

Le dispositif 10 comprend essentiellement un drapeau 12 apte à se déformer sous l'effet de l'écoulement d'un fluide (écoulement représenté par la flèche F1) et un dispositif oscillateur 14 avec un mât oscillant 16 auquel le drapeau 12 est fixé.

Par drapeau, on entend ici un corps apte à se déformer, notamment élastiquement, sous l'effet de l'écoulement d'un fluide le long de ce corps. Le drapeau peut prendre toute forme géométrique, même si une forme rectangulaire est représentée sur la figure 1. Le drapeau présente généralement une forme fine, c'est-à-dire qu'une de ses dimensions - son épaisseur - est nettement inférieure à ses autres dimensions - la hauteur et la largeur. Notamment, l'épaisseur du drapeau peut être au moins dix fois, voire au moins cent fois inférieure à sa largeur et à sa hauteur. Le drapeau peut ainsi être :
- en tôle, notamment en tôle d'acier,
- en plastique, notamment en polytéréphtalate d'éthylène, plus particulièrement en Mylar®,
- en papier, ou
- en matériau textile, le drapeau prenant alors la forme d'une étoffe textile.

Le drapeau prend de préférence la forme d'une membrane ou d'une tôle.

Dans le cas où le drapeau est en tôle, notamment, il peut comprendre une pluralité de plaques de tôles - par exemple trois - articulées les unes par rapport aux autres. En d'autres termes, les différentes plaques peuvent pivoter les unes par rapport aux autres, par rapport à un axe choisi de préférence perpendiculaire à la direction de l'écoulement.

Par ailleurs, par dispositif oscillateur, on entend ici un dispositif apte à osciller, même en l'absence du drapeau 12. En d'autres termes, en l'absence du drapeau 12, le dispositif oscillateur peut évoluer de part et d'autre d'un équilibre stable, sous l'effet d'une simple excitation extérieure. Dans le cas du mât oscillant 16 de la figure 1, ces oscillations correspondent à une rotation autour de son axe dans les deux sens opposés (double flèche F4), qui peuvent être engendrées par une rotation initiale du mât oscillant 16.

Tel qu'illustré sur la figure 1, le dispositif oscillateur 14 comprend outre le mât oscillant 16, auquel est fixé le drapeau 12, un bras d'inertie 18 fixé au mât oscillant 16. Le bras d'inertie 18 est ici fixé sensiblement en son milieu au mât oscillant 16. En outre le bras d'inertie 18 est fixé perpendiculairement au mât oscillant 16. Au voisinage des deux extrémités opposées du bras d'inertie 18, sont fixés des moyens de rappel, ici des ressorts linéaires 20, 22. Les ressorts 20, 22 sont ici sensiblement identiques. Les ressorts 20, 22 relient le bras d'inertie 8 à un bâti 24, fixe par rapport à l'écoulement du fluide F1. Les ressorts 20, 22 agissent en opposition de phase, c'est-à-dire qu'ils exercent des forces de rappel égales mais opposées (flèches F2 et F3, respectivement) sur le bras d'inertie 18, tendant à faire osciller le mât oscillant 16 et tout le dispositif oscillateur 14 autour d'une position stable où les forces exercées par chacun des deux ressorts 20, 22 se compensent.

Bien entendu, le dispositif oscillateur représenté et décrit ici est un exemple non limitatif. Tout autre dispositif oscillateur pourrait a priori être mis en oeuvre, du moment qu'il est apte à être excité par la déformation du drapeau 12.

Ainsi, notamment, l'oscillateur pourrait comporter un simple mât 16, sans bras d'inertie 18, et être relié à un bâti fixe 24 par l'intermédiaire d'un ressort de torsion.

La figure 2 illustre la réponse en oscillation du dispositif 10 à une vitesse d'écoulement d'un fluide (ici de l'air). Comme il peut être constaté, sur une première plage de vitesse d'écoulement faible (ici, inférieure à 6 m/s), la réponse angulaire est limitée. Cela peut s'expliquer par l'absence de flottement du drapeau sur cette plage de vitesse d'écoulement. En d'autres termes, les efforts exercés par l'écoulement sur le drapeau ne permettent pas à ce dernier de flotter.

Sur une deuxième gamme de vitesse d'écoulement (ici entre sensiblement 6 et sensiblement 12 m/s), l'amplitude des oscillations du mât croit sensiblement proportionnellement avec la vitesse d'écoulement, pour atteindre une valeur à sensiblement 27° RMS (de l'anglais « Root Mean Square », ou « racine carrée de la moyenne des carrés »). Dans cette deuxième gamme de vitesse d'écoulement, cette dernière est suffisante pour permettre au drapeau de flotter.

Enfin, quand la vitesse d'écoulement devient supérieure à une valeur de seuil (ici, sensiblement 12 m/s), l'amplitude des oscillations du mât commence à décroître avec la vitesse de l'écoulement.

La figure 2 illustre l'amplification de l'amplitude des oscillations dans un dispositif de récupération d'énergie 10 tel qu'illustré à la figure 1, par rapport à un dispositif analogue, ne présentant pas un dispositif oscillateur 14 (c'est-à-dire dans lequel les ressorts 20 et 22 ne sont pas reliés à un bâti fixe par rapport à l'écoulement). Cette figure 2 montre que la réponse d'un dispositif récupérateur d'énergie sans dispositif oscillateur intervient pour une vitesse d'écoulement plus importante (ici de l'ordre de 8 m/s contre 6 m/s pour un dispositif avec oscillateur) et que l'amplitude de cette réponse reste très limitée par rapport à la réponse d'un dispositif avec oscillateur : l'amplitude maximale atteinte sans oscillateur est de l'ordre de 2,5°, contre une amplitude maximale de l'ordre de 27° pour un dispositif avec oscillateur.

Ainsi, le dispositif de récupération d'énergie 10 présente le double avantage d'amplifier les oscillations du mât et que cette amplification se produit pour une plage de vitesse d'écoulement plus large.

Par ailleurs, l'oscillation en rotation du mât oscillant du dispositif de récupération d'énergie 10 est auto-limitée en amplitude. Lorsque la vitesse de l'écoulement est trop forte, il se produit une perte de synchronisation en fréquence entre les oscillations du drapeau et les oscillations du mât oscillant. Il ne subsiste plus alors que le flottement classique du drapeau. Cela confère une sécurité naturelle au dispositif de récupération d'énergie 10.

Ces avantages du dispositif de la figure 1 peuvent être exploités sous différentes formes et dans différentes applications.

Tout d'abord, dans un dispositif récupérateur d'énergie d'un écoulement de fluide, l'augmentation de l'amplitude des oscillations du mât permet de récupérer plus d'énergie, l'énergie récupérée dans une telle application étant directement fonction de l'amplitude des oscillations du mât. Ainsi, le mât oscillant 16 peut être couplé à un dispositif d'entraînement tel que décrit dans la demande WO-A-2006/093790 pour transformer les oscillations du mât en rotation continue d'un arbre de sortie. L'énergie cinétique de cet arbre de sortie peut alors être transformée en énergie électrique par un générateur électrique, par exemple au moyen d'un dispositif dynamoélectrique (dynamo) ou d'un alternateur.

Par rapport au principe de cellules piézo-électriques insérées dans la membrane du drapeau, le dispositif de récupération d'énergie proposé ici présente une simplification de design qui permet à la fois de diminuer les coûts et d'améliorer le rendement.

Dans la pratique, pour les meilleurs résultats, le drapeau 12 et le dispositif oscillateur 14 sont conformés pour que la fréquence de résonance du dispositif oscillateur 14 corresponde sensiblement à une fréquence de flottement du drapeau 12.

Cependant, cette amplification de l'amplitude des oscillations du mât permet de mettre en oeuvre le dispositif de récupération d'énergie 10 dans un système de mesure d'une vitesse d'un écoulement. En effet, comme le montre la figure 2, l'amplitude des oscillations du mât est sensiblement proportionnelle à la vitesse de l'écoulement du fluide le long du drapeau. En outre, la variation de cette amplitude des oscillations du mât, nettement plus importante que dans le cas d'un dispositif récupérateur d'énergie sans dispositif oscillateur, permet de distinguer plus facilement entre deux vitesses d'écoulement ainsi mesurées. Ainsi, un système de mesure d'une vitesse d'écoulement peut être réalisé avec un dispositif de récupération d'énergie 10 tel que décrit ci-avant et des moyens pour fournir un signal de sortie fonction de l'amplitude des oscillations du mât oscillant. Ceci peut notamment être réalisé en déterminant une valeur de coefficient de proportionnalité entre la vitesse d'écoulement du fluide et l'amplitude des oscillations du mât oscillant en effectuant une mesure de réglage, à vitesse d'écoulement connue, pour ensuite pouvoir déduire de l'amplitude de la rotation du mât la vitesse d'écoulement du fluide le long du drapeau. Il est à noter ici qu'un coefficient de proportionnalité peut également être déterminé entre la vitesse d'écoulement du fluide et la valeur du courant de sortie d'un dispositif dynamoélectrique ou d'un alternateur relié au mât comme expliqué ci-dessus au moyen d'un dispositif d'entraînement tel que décrit dans la demande WO-A-2006/093790.

Un système de mesure d'un débit peut également être réalisé de manière sensiblement identique. Ce système comprend, outre le dispositif de récupération d'énergie 10, un conduit de section connue dans lequel s'étend le drapeau 12, et des moyens pour fournir un signal de sortie fonction de l'amplitude des oscillations du mât oscillant 16 et de la section dudit conduit. Là encore, une mesure initiale à débit connu peut permettre de définir un coefficient de proportionnalité entre le débit d'écoulement et l'un parmi l'amplitude des oscillations du mât oscillant 16 et la valeur du courant de sortie d'un dispositif dynamoélectrique ou d'un alternateur relié au mât comme expliqué ci-dessus au moyen d'un dispositif d'entraînement tel que décrit dans la demande WO-A-2006/093790.

Un système de régulation de débit/de vitesse d'écoulement d'un fluide peut également être imaginé sur la base du dispositif de récupération d'énergie 10. Ce système de régulation comprend, outre un dispositif de récupération d'énergie de l'écoulement du fluide 10, une vanne adaptée à modifier le débit et/ou la vitesse de l'écoulement du fluide, et des moyens pour commander l'ouverture ou la fermeture de la vanne en fonction de l'amplitude des oscillations du mât oscillant 16.

Les moyens de commande peuvent être mécaniques. Par exemple, le système peut être réalisé de telle sorte que le bras d'inertie 18 puisse actionner la vanne en fonction de l'amplitude des oscillations du mât, pour modifier un débit.

Les moyens de commande peuvent également être électriques. Dans ce cas, le couplage du dispositif récupérateur d'énergie 10 peut passer par l'intermédiaire d'une commande électrique. Les oscillations du mât oscillateur permettent alors la génération d'un courant électrique, comme expliqué ci-avant, dont la valeur commande directement ou indirectement la vanne.

L'actionnement de la vanne peut être du type tout ou rien. Dans ce cas, tant que l'amplitude des oscillations du mât est inférieure à une valeur seuil, la vanne est dans une première position ouverte ou fermée et dès que cette amplitude dépasse la valeur de seuil, la vanne est dans sa deuxième position fermée ou ouverte. Cependant, l'actionnement de la vanne, donc son ouverture, peut également être proportionnel(le) à l'amplitude des oscillations du mât.

Bien entendu, la présente invention ne se limite pas à la description ci-dessus. De nombreuses variantes de réalisation sont accessibles à l'homme de l'art, dans le cadre de l'invention définie par le jeu de revendications ci-joint.

## Revendications

1. Dispositif de récupération d'énergie de l'écoulement d'un fluide (10) comprenant un drapeau (12), apte à se déformer sous l'effet de l'écoulement du fluide (F1), et un dispositif oscillateur (14) comprenant un mât oscillant (16) en rotation autour de son axe, auquel est fixé le drapeau (12), le mât oscillant (16) étant destiné à être relié à un bâti (24), fixe par rapport à l'écoulement de fluide, par des moyens de rappel (20, 22), le drapeau (12) et le dispositif oscillateur (14) étant conformés pour que la fréquence de résonance du dispositif oscillateur (14) corresponde à une fréquence de flottement du drapeau (12).

2. Dispositif selon la revendication 1, dans lequel le dispositif oscillateur comporte un bras d'inertie (18) fixé au mât oscillant (16), le mât oscillant (16) étant de préférence fixé sensiblement au milieu du bras d'inertie (18) et/ou perpendiculairement au bras d'inertie (18), le bras d'inertie (18) étant par ailleurs destiné à être relié au bâti (24) par les moyens de rappel (20, 22).

3. Dispositif selon la revendication 2, dans lequel les moyens de rappel comprennent deux ressorts linéaires (20 ; 22), de préférence identiques, fixés chacun au voisinage d'une extrémité respective du bras d'inertie (18).

4. Dispositif selon la revendication 1, dans lequel les moyens de rappel (20, 22) sont un ressort de torsion.

5. Dispositif selon l'une quelconque des revendications précédentes, dans lequel le drapeau (12) est
- en tôle, notamment en tôle d'acier,
- en plastique, notamment en polytéréphtalate d'éthylène, plus particulièrement en Mylar®,
- en papier, ou
- en matériau textile.

6. Dispositif selon l'une quelconque des revendications précédentes, dans lequel le drapeau (12) comporte une pluralité, de préférence d'au moins trois, plaques articulées les unes par rapport aux autres.

7. Dispositif selon l'une quelconque des revendications précédentes, comprenant en outre un générateur électrique, notamment une machine dynamoélectrique, relié au mât oscillant (14) pour transformer l'énergie mécanique de la rotation du mât oscillant (16) en énergie électrique.

8. Système de mesure d'une vitesse d'un écoulement de fluide comprenant un dispositif de récupération d'énergie de l'écoulement du fluide selon l'une quelconque des revendications précédentes, et des moyens pour fournir un signal de sortie fonction de l'amplitude des oscillations du mât oscillant (16).

9. Système de mesure de débit d'un écoulement de fluide comprenant un dispositif de récupération d'énergie de l'écoulement du fluide selon l'une quelconque des revendications 1 à 7, un conduit de section connue dans lequel s'étend le drapeau, et des moyens pour fournir un signal de sortie fonction de l'amplitude des oscillations du mât oscillant (16) et de la section dudit conduit.

10. Système de régulation du débit et/ou de la vitesse d'un écoulement de fluide comprenant un dispositif de récupération d'énergie de l'écoulement du fluide selon l'une quelconque des revendications 1 à 7, une vanne adaptée à modifier le débit et/ou la vitesse de l'écoulement du fluide, et des moyens pour commander l'ouverture ou la fermeture de la vanne en fonction de l'amplitude des oscillations du mât oscillant (16).

## Patentansprüche

1. Energierückgewinnungsvorrichtung aus der Strömung eines Fluids (10), umfassend eine Flagge (12), die geeignet ist, sich unter der Wirkung der Strömung des Fluids (Fl) zu verformen, und eine Oszillatorvorrichtung (14), die einen oszillierenden Mast (16) aufweist, der sich um seine Achse dreht, an dem die Flagge (12) befestigt ist, wobei der oszillierende Mast (16) dazu bestimmt ist, mit einem Rahmen (24), der in Bezug auf die Fluidströmung fest ist, durch Rückstellmittel (20, 22) verbunden zu werden, wobei die Flagge (12) und die Oszillatorvorrichtung (14) ausgebildet sind, damit die Resonanzfrequenz der Oszillatorvorrichtung (14) einer Schwebungsfrequenz der Flagge (12) entspricht.

2. Vorrichtung nach Anspruch 1, wobei die Oszillatorvorrichtung einen Trägheitsarm (18) aufweist, der an dem oszillierenden Mast (16) befestigt ist, wobei der oszillierende Mast (16) vorzugsweise im Wesentlichen in der Mitte des Trägheitsarms (18) und/oder senkrecht zu dem Trägheitsarm (18) befestigt ist, wobei der Trägheitsarm (18) ferner dazu bestimmt ist, durch die Rückstellmittel (20, 22) mit dem Rahmen (24) verbunden zu werden.

3. Vorrichtung nach Anspruch 2, wobei die Rückstellmittel zwei lineare Federn (20; 22) aufweisen, die vorzugsweise identisch sind, die jeweils in der Nähe eines jeweiligen Endes des Trägheitsarms (18) befestigt sind.

4. Vorrichtung nach Anspruch 2, wobei die Rückstellmittel (20, 22) eine Torsionsfeder sind.

5. Vorrichtung nach einem der vorhergehenden Ansprüche, wobei die Flagge (12)
- aus Blech, insbesondere aus Stahlblech,
- aus Kunststoff, insbesondere aus Polyethylenterephthalat, insbesondere aus Mylar®,
- aus Papier oder
- aus Textilmaterial ist.

6. Vorrichtung nach einem der vorhergehenden Ansprüche, wobei die Flagge (12) mehrere, vorzugsweise mindestens drei, Platten aufweist, die zueinander gelenkig verbunden sind.

7. Vorrichtung nach einem der vorhergehenden Ansprüche, ferner umfassend einen elektrischen Generator, insbesondere eine dynamoelektrische Maschine, der mit dem oszillierenden Mast (14) verbunden ist, um die mechanische Energie der Rotation des oszillierenden Mastes (16) in elektrische Energie umzuwandeln.

8. System zum Messen einer Geschwindigkeit einer Fluidströmung, umfassend eine Energierückgewinnungsvorrichtung aus der Strömung des Fluids nach einem der vorhergehenden Ansprüche und Mittel zum Abgeben eines Ausgangssignals in Abhängigkeit von der Amplitude der Schwingungen des oszillierenden Mastes (16) .

9. System zur Durchflussmessung einer Fluidströmung, umfassend eine Energierückgewinnungsvorrichtung aus der Strömung des Fluids nach einem der Ansprüche 1 bis 7, eine Rohrleitung von bekanntem Querschnitt, in der sich die Flagge erstreckt, und Mittel zum Abgeben eines Ausgangssignals in Abhängigkeit von der Amplitude der Schwingungen des oszillierenden Mastes (16) und des Querschnitts der Rohrleitung.

10. System zur Regelung des Durchflusses und/oder der Geschwindigkeit einer Fluidströmung, umfassend eine Energierückgewinnungsvorrichtung aus der Strömung des Fluids nach einem der Ansprüche 1 bis 7, ein Ventil, das geeignet ist, den Durchfluss und/oder die Geschwindigkeit der Strömung des Fluids zu ändern und Mittel zum Steuern des Öffnens oder des Schließens des Ventils in Abhängigkeit von der Amplitude der Schwingungen des oszillierenden Mastes (16).

## Claims

1. Device for recuperating energy from the flow of a fluid (10), comprising a flag (12) able to deform under the effect of the flow of the fluid (F1), and an oscillator device (14) comprising a pole (16) oscillating in rotation about its axis, to which the flag (12) is attached, the oscillating pole (16) being intended to be connected to a supporting structure (24) that is fixed with respect to the flow of fluid, by return means (20, 22), the flag (12) and the oscillator device (14) being configured so that the resonant frequency of the oscillator device (14) corresponds to a frequency of flutter of the flag (12).

2. Device according to Claim 1, in which the oscillator device comprises an inertial arm (18) attached to the oscillating pole (16), the oscillating pole (16) preferably being attached substantially in the middle of the inertial arm (18) and/or at right angles to the inertial arm (18), the inertial arm (18) moreover being intended to be connected to the supporting structure (24) by the return means (20, 22).

3. Device according to Claim 2, in which the return means comprise two linear springs (20; 22), preferably identical, each one fixed in the vicinity of a respective end of the inertial arm (18).

4. Device according to Claim 1, in which the return means (20, 22) are a torsion spring.

5. Device according to any one of the preceding claims, in which the flag (12) is
- made of sheet metal, notably steel sheet,
- made of plastic, notably of polyethylene terephthalate, more particularly of Mylar®,
- made of paper or
- made of textile material.

6. Device according to any one of the preceding claims, in which the flag (12) comprises a plurality of, preferably at least three, plates articulated to one another.

7. Device according to any one of the preceding claims, further comprising an electric generator, notably a dynamoelectric machine, connected to the oscillating pole (14) to convert the mechanical energy of the rotation of the oscillating pole (16) into electrical energy.

8. System for measuring the velocity of a flow of fluid comprising a device for recuperating energy from the flow of the fluid according to any one of the preceding claims, and means for supplying an output signal dependent on the amplitude of the oscillations of the oscillating pole (16) .

9. System for measuring the flow rate of a flow of fluid comprising a device for recuperating energy from the flow of the fluid according to any one of Claims 1 to 7,
a duct of known cross section in which the flag extends, and
means for supplying an output signal dependent on the amplitude of the oscillations of the oscillating pole (16) and on the cross section of the said duct.

10. System for regulating the flow rate and/or the velocity of a flow of fluid comprising a device for recuperating energy from the flow of the fluid according to any one of Claims 1 to 7,
a valve designed to alter the flow rate and/or the velocity of the flow of the fluid and means for commanding the opening or closing of the valve according to the amplitude of the oscillations of the oscillating pole (16) .
